# EUROPÄISCHE PATENTSCHRIFT

(11) **EP 0 870 271 B1**
(45) Veröffentlichungstag und Bekanntmachung des Hinweises auf die Patenterteilung: **09.04.2003**
(21) Anmeldenummer: 96901226.9
(22) Anmeldetag: 30.01.1996
(51) Int. Cl.: G06K 7/08, G06K 19/07, G06K 7/06

(54) **Chipkarte und Verfahren zum Lesen von Chipkarten**
Chipcard and method for reading Chipcards
Carte à mémoire et procédé pour la lecture des cartes à mémoire

(30) Priorität: 03.02.1995 DE 19503607
(43) Veröffentlichungstag der Anmeldung: 14.10.1998
(73) Patentinhaber: Angewandte Digital Elektronik GmbH, 21521 Dassendorf (DE)
(72) Erfinder: KREFT, Hans-Diedrich, D-21521 Dassendorf (DE)
(74) Vertreter: Mierswa, Klaus, Dipl.-Ing.
(86) Internationale Anmeldenummer: DE9600158
(87) Internationale Veröffentlichungsnummer: WO96024112

(56) Entgegenhaltungen:
- EP-A- 0 203 683
- EP-A- 0 373 411
- EP-A- 0 534 559
- EP-A- 0 554 830
- DE-C- 3 935 364
- DE-C- 4 327 334
- US-A- 4 575 621

## Beschreibung

### Technisches Gebiet:

Die Erfindung betrifft ein Verfahren zum Austausch von Energie- und Daten zwischen einem Schreib/Leseendgerät und einer Chipkarte mit kontaktlosen Anschlüssen und wahlweise zusätzlichen Kontaktanschlüssen gemäß dem Oberbegriff des Anspruch 1 sowie eine derartige Chipkarte zum Austausch von Energie- und Daten zwischen dem Schreib/Leseendgerät des Verfahrens und der Chipkarte.

### Stand der Technik:

Es sind Chipkarten bekannt, die kontaktfrei oder kontaktbehaftet mit Schreib/Leseendgeräten Energie und Daten austauschen. Diese Karten werden für vielfache Anwendungen wie Telefonkarten, Gesundheitskarten oder Zutrittskontrollkarten eingesetzt. Einen Überblick über solche Karten und deren Anwendungen ist in drei Ausgaben der Elektronik Jahrgang 93 zusammengestellt. Eine Kontaktanschlüsse und kontaktfreie Übertragungselemente enthaltende Chipkarte, bei der wahlweise die Energie- und Datenübertragung über eine der beiden Strecken erfolgen kann, ist aus der DE 39 35 364 C1 bekannt.

Durch die EP 0 203 683 A2 ist eine Chipkarte bekannt geworden, die ein Bauteil enthält, in welchem Informationen enthalten sind, die üblicherweise in dem Magnetstreifen einer Magnetstreifenkarte enthalten sind. Bei der Benutzung der Chipkarte werden diese Daten zusammen mit weiteren Daten kontaktlos in einer Richtung in ein Lesegerät übertragen. Eine bidirektionale Energie- und Datenübertragung findet jedoch nicht statt.

Durch die EP 534 559 A1 ist eine Chipkarte gemäß ISO-Standard 7816 und vorläufiger ISO-Standard 10536 vorgeschlagen worden, die kontaktfrei oder kontaktbehaftet mit Schreib/Leseendgeräten Energie und Daten austauscht. Die Daten können entweder über eine weite Entfernung mittels geringer Energie ausgelesen werden, wobei nur ein Teil des integrierten Schaltkreises aktiviert wird, oder es findet ein Energie- und Datenaustausch gemäß dem normalen standardisierten Modus mittels der Kontakte statt, wobei auch Algorithmen zur Datensicherung verwendet werden können.

Durch die DE 43 27 334 C1 ist eine kontaktlos arbeitende Chipkarte bekannt geworden, die selbsttätig erkennt, ob sie im Nahbereich eines Terminals arbeitet. Es wird hierzu ein "Stereo-Effekt" ausgenutzt, der sich ergibt, sofern zwei Übertrager-Spulen oder Kondensatorplatten in der Karte vorhanden sind und Phasenverschiebungen bzw. -differenzen bzw. -drehungen ausgemessen werden, die Rückschlüsse auf den Abstand der Karte zum Terminal zulassen.

Durch die DE 42 27 551 A1 ist eine kontakt- und batterielose Chipkarte mit Feldstärkedetektor mit einer Antennenspule und einer Sende- und Empfangsstufe bekannt, die über ein von einem Schreib/Lesegerät erzeugtes elektromagnetisches Wechselfeld zum einen die Chipkarte mit Energie versorgt und zum anderen die bidirektionale Datenübertragung vornimmt. Die Chipkarte weist einen Detektor zur Bestimmung der Energie des auf die Chipkarte übertragenden elektromagnetischen Wechselfeldes des Schreib/ Lesegerätes auf. Die Funktionen des Anwendungsteils, die bei der Ausführung einen hohen Energiebedarf haben, werden nur dann ausgeführt, wenn der Detektor eine ausreichende Feldstärke detektiert hat. Dadurch soll eine fehlerhafte oder unvollständige Ausführung energieaufwendiger Funktionen der Chipkarte vermieden werden.

### Technische Aufgabe:

Der Erfindung liegt die Aufgabe zugrunde, ein Verfahren und eine Chipkarte zu schaffen, mit welchen die Informationsabgabe und der -empfang von Chipkarten vergleichbar zu der von heutigen Magnetstreifenkarten ist, wobei die üblichen Datenformate, wie sie heute auf Magnetstreifen von Magnetstreifenkarten verwendet werden, auch bei kontaktfreier Abgabe von Informationen von kontaktfrei arbeitenden Chipkarten erzeugt werden sollen.

### Offenbarung der Erfindung und deren Vorteile:

Die Lösung der Aufgabe besteht beim gattungsgemäßen Verfahren erfindungsgemäß darin, dass mit der Aktivierung dieser Schaltungsteil berührungslos Informationen zum Schreib/Leseendgerät mittels elektromagnetischer Schwingungen aussendet und wahlweise empfängt, wobei in den ausgesandten Informationen die Daten mit einem Inhalt enthalten sind, wie sie den Daten/Informationsinhalten von Magnetstreifenkarten entsprechen, so dass die Chipkarte, manuell in die Nähe eines Schreib/Leseendgerätes gehalten, dieses veranlaßt, die Daten der Chipkarte in der gleichen Form zu erstellen, die auch eine Magnetstreifenkarte beim Ablesen des Magnetstreifens durch einen magnetischen Lesekopf in einem Magnetstreifenleser erzeugen würde.

Vorteilhaft geschieht das kontaktlose Einlesen der elektromagnetisch abzugebenden Magnetstreifeninformationen in den Schaltungsteil der Chipkarte über zwei Spulen, womit die Chipkarte elektronisch selbsttätig detektiert, ob sie sich im Nahbereich oder im Fernbereich eines Schreib/Leseendgerätes befindet und in Abhängigkeit von dieser Detektierung der Empfang der einzugebenden Magnetstreifeninformation ein- oder ausgeschaltet wird, wobei das kontaktlose Einlesen der Magnetstreifeninformationen über die zwei Spulen nur im Nahbereich des Schreib/Leseendgerätes durchgeführt werden kann.

In vorteilhafter Ausgestaltung kann einerseits bei kontaktfreier elektromagnetischer Aktivierung das Schaltungsteil die Daten entsprechend Magnetstreifenkartendaten aus dem Bauteil ausschließlich kontaktfrei übertragen, hingegen wird jedwede Form des kontaktfreien Einspeicherns von Daten in den Bauteil durch elektronische Schaltungsmittel innerhalb der Chipkarte gesperrt, andererseits wird bei Aktivierung durch die Kontaktanschlüsse und/oder über die zwei Spulen der Schaltungsteil zum Einlesen von Daten entsprechend Magnetstreifenkartendaten geöffnet, wobei das kontaktlose Einlesen der Magnetstreifeninformationen über die zwei Spulen nur im Nahbereich des Schreib/Leseendgerätes durchgeführt werden kann.

Erfindungsgemäß ist es damit möglich, die üblichen Datenformate, wie sie heute auf Magnetstreifen von Magnetstreifenkarten verwendet werden, auch durch die kontaktfreie Abgabe von Informationen von kontaktfrei arbeitenden Chipkarten zu erzeugen. Die Information, welche kontaktfrei abgegeben wird, kann vorteilhaft in einer bestimmten logischen Form (Protokoll) oder physikalischen Modulationsform so abgegeben werden, daß eine eindeutige Erkennung der Information und ihrer Inhalte für unterschiedliche Schreib/Leseendgerät in der gleichen Weise reproduzierbar möglich ist. Durch diese Form der Reproduzierbarkeit der kontaktlosen Informationsabgabe können vorteilhaft die Informationen unterschiedlicher Karten in der gleichen Weise von unterschiedlichen Endgeräten interpretiert werden. Ferner ist es vorteilhaft möglich, Sicherheitskodierungen in den kontaktfrei zur Verfügung gestellten Informationen per Kontaktstrecke neu zu laden.

Beim Aktivieren des Schaltungsteils der Chipkarte über die Kontaktanschlüsse kann gleichzeitig über dieselben Energie zur elektromagnetischen Datenübertragung eingespeist werden. Ebenso können beim Nachladen von Daten aus dem Schreib/Leseendgerät in die Chipkarte über die Kontaktanschlüsse oder über das elektromagnetische Wechselfeld des Schreib/Leseendgerätes Informationen zur Verschlüsselung der vom Schreib/Leseendgerät auszugebenden Daten in die Chipkarte geladen werden, so daß die kontaktfrei elektromagnetisch übermittelten Daten sich in ihrer Codierung in Abhängigkeit vom Nachladen ändern.

Die kontaktlos übertragenen Daten der Chipkarte werden an das Schreib/Leseendgerät über eine Datenleitung an ein weiteres, entfernt aufgestelltes Gerät übertragen, welches aufgrund Gleichheit der übertragenen Daten entweder aus dem Magnetstreifen der Chipkarte oder aus dem Bauteil nicht unterscheiden kann, ob die erhaltene Information vom Magnetstreifen oder aus dem Bauteil herrührt.

Eine Vorrichtung bestehend aus einem Schreib/Leseendgerät zum Austausch von Energie und Daten mit einer Chipkarte zur Durchführung des Verfahrens besitzt sowohl Mittel zur energetischen Verbindung und/oder Kommunikation mit den Kontaktanschlüssen und/oder mit den Spulen oder Kondensatoren der Chipkarte als auch einen Magnetstreifenleser zum Lesen des Magnetstreifens der Chipkarte, so dass dergestalt Informationen vom Magnetstreifen abgelesen als auch über die Kontaktanschlüsse und/oder Spulen und/oder Kondensatoren in die Chipkarte ein- und ausgelesen werden können.

Des Weiteren wird die Aufgabe gelöst durch eine Chipkarte mit kontaktlosen Anschlüssen und wahlweise zusätzlichen Kontaktanschlüssen zum Austausch von Energie- und Daten zwischen einem Schreib/Leseendgerät und der Chipkarte, wobei Energie- und Daten entweder kontaktlos zwischen Schreib/Leseendgerät und Chipkarte mittels elektromagnetischer Wechselfelder oder kontaktbehaftet über die Kontaktanschlüsse beim Einführen der Chipkarte in das Schreib/Leseendgerät übertragen werden, mit einem Bauteil, wie elektronischer Speicher, in welchem Daten entsprechend den Magnetstreifenkartendaten einer Magnetstreifenkarte enthalten sind, wobei die Chipkarte bei Erreichen eines Mindestwertes des Energieinhaltes des elektromagnetischen Wechselfeldes des Schreib/Leseendgerätes sich mit wenigstens einem Schaltungsteil ihrer elektronischen Schaltung selbsttätig aktiviert und dadurch mittels des Schaltungsteil die Daten aus dem Bauteil entsprechend den Magnetstreifenkartendaten einer Magnetstreifenkarte über die kontaktlosen Anschlüsse der Chipkarte ausgegeben werden.

In einer weiteren Ausgestaltung sind im Bauteil der Chipkarte Daten entsprechend mehrerer unterschiedlicher Codes von Magnetstreifenkartendaten enthalten, so daß die Chipkarte zur Erfüllung unterschiedlicher Anforderungen mit unterschiedlichen Schreib/Leseendgeräten oder mit unterschiedichen Programmen geeignet ist, die jeweils auf die unterschiedlichen Codierungen eingestellt sind und die Chipkarte über die kontaktfreie Verbindungsstrecke die unterschiedlichen Codierungen abzugeben imstande ist.

In weiterer Ausgestaltung ist die Chipkarte eine solche mit Magnetstreifen zur Aufnahme und zum Lesen von Magnetstreifenkartendaten in bekannter Weise oder eine solche ohne Magnetstreifen.

In weiterer Ausgestaltung ist die Chipkarte mit zusätzlichen elektrischen Energiespeichern, wie Kondensatoren oder Batterien oder Akkumulatoren, versehen, um die kontaktfrei auszugebenden Daten über größere Entfernungen zu übertragen, als es bei kontaktfreier Datenübertragung mittels des elektromagnetischen Wechselfeldes der Chipkarte möglich ist.

In einer weiteren Ausgestaltung weist die Chipkarte zum kontaktlosen Einlesen der elektromagnetisch abzugebenden Magnetstreifeninformationen in den Schaltungsteil der Chipkarte zwei Spulen auf, mittels derselben die Chipkarte elektronisch selbsttätig zu detektieren imstande ist, ob sie sich im Nahbereich oder im Fernbereich eines Schreib/Leseendgerätes befindet und in Abhängigkeit von dieser Detektierung die Chipkarte den Empfang der einzugebenden Magnetstreifeninformation ein- oder ausgeschaltet, wobei die Chipkarte das kontaktlose Einlesen der Magnetstreifeninformationen über die zwei Spulen nur im Nahbereich des Schreib/Leseendgerätes durchführt.

### Kurzbeschreibung der Zeichnung, in der zeigen:

- Figur 1: ein Scbreib/Leseendgerät in schematischer Darstellung mit einem elektronische Speicher und einer Chipkarte, die sich im Aktivierungsbereich elektromagnetisch eingespeister Energie seitens des Schreib/Leseendgerätes befindet, welches mit einer Datenleitung zu einem entfernt aufgestellten Gerät verbunden ist und
- Figur 2: in symbolischer Darstellung die kontaktfreie Aussendung von Daten durch ein Bauteil der Chipkarte sowie den bidirektionalen Austausch von Daten des Bauteils über Kontaktanschlüsse oder Spulen.

### Bevorzugte Ausführungsform der Erfindung:

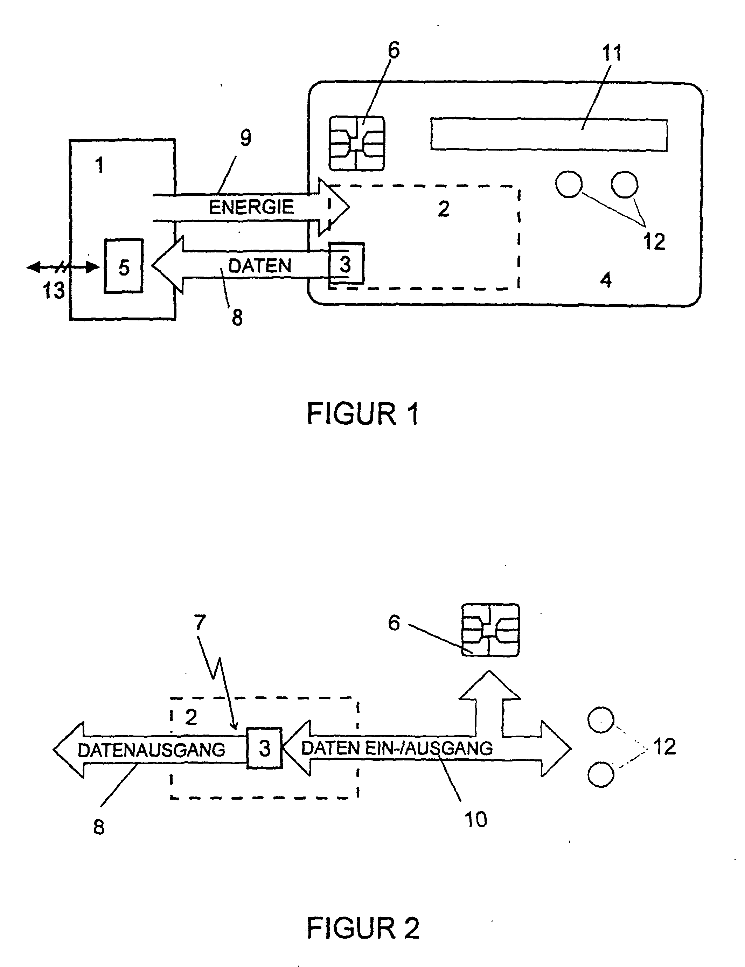

Figur 1 zeigt schematisch ein Schreib/Leseendgerät 1, nachfolgend nur Endgerät genannt, mit einem elektronischen Speicher 5 sowie einer Datenleitung 13 zu einem entfernt aufgestellten Gerät. Eine Chipkarte 4 mit einem Magnetstreifen 11 enthält einen elektronischen Schaltungsteil 2, welcher sich in einem elektromagnetischen Feld selbsttätig aktiviert. Mit der Bezugsziffer 9 ist elektromagnetisch eingespeiste Energie gekennzeichnet, mit der Bezugsziffer 8 berührungslos übertragene Daten von der Chipkarte 4 zum Schreib/Leseendgerät 1. Ein Bauteil 3 der Schaltungsanordnung 2 kann ausschließlich kontaktfrei Daten abgeben und Daten ausschließlich über die Kontaktanschlüsse 6 oder zwei Spulen 12 empfangen.

Figur 2 symbolisiert die elektromagnetische, kontaktfreie Einspeisung von Energie als Ursache für das kontaktfreie Aussenden von Daten 8 durch das Bauteil 3 zum Schreib/Leseendgerät 1. Mit der Bezugsziffer 10 wird der bidirektionale Austausch von Daten des Baueils 3 über die Kontaktanschlüsse 6 oder Spulen 12 symbolisiert.

Die Erfindung betrifft ebenso Chipkarten 4 (Smartcards), welche, zum Daten- und Energieaustausch mit Schreib/Leseendgeräte 1, in unterschiedlichen Ausführungen wahlweise kontaktbehaftet, kontaktfrei als auch kontaktbehaftet und kontaktfrei arbeiten können. Die Chipkarten 4 zeichnen sich dadurch aus, daß ein Teil ihrer Elektronik, nämlich der elektronische Schaltungsteil 2, sich in einem äußeren elektromagnetischen Feld 9 bei Erreichen einer gewissen Energiedichte selbsttätig aktiviert. Mit der Aktivierung kann die Chipkarte 4 Informationen 8 aus ihrem Bauteil 3, zum Beispiel aus einem elektronischen Speicher, kontaktfrei elektromagnetisch abgeben oder wahlweise empfangen. In den abgegebenen Informationen sind diejenigen Informationen/Daten 8 enthalten, wie sie auf üblichen Magnetstreifen 11 abgegeben werden. Damit sendet eine kontaktfrei arbeitende Chipkarte zu ihrem Schreib/Leseendgerät 1 Informationen mit einem Inhalt, wie sie den Informationsinhalten von Magnetstreifen entsprechen. Das Schreib/Leseendgerät 1 kann aus diesen Informationen 8 genau die Daten nach Form und Inhalt erstellen, die auch eine Magnetstreifenkarte beim Ablesen durch einen magnetischen Lesekopf in einem Magnetstreifenleser erzeugen würde. Diese Daten können im Speicher 5 des Schreib/Leseendgerätes 1 gespeichert oder über eine Datenleitung 13 anderen entfernt aufgestellten Geräten zur Verfügung gestellt werden.

Gemäß dieser Beschreibung ist es möglich, Chipkarten 4 manuell in die Nähe von Schreib/Leseendgeräten 1 zu halten und diese zu veranlassen, Daten der Chipkarte in der gleichen Form abzugeben, wie sie heute bereits von Magnetstreifenlesegeräten abgegeben werden. Ein entfernt aufgestelltes Gerät ist nicht in der Lage zu entscheiden, ob der erhaltene Magnetstreifencode von einem Magnetstreifen 11 oder aus dem Speicher 3 der Chipkarte kommt.

Das Laden der spezifischen Daten 10 einer Magnetstreifenkarte 4 in den Schaltungsteil 2 der Chipkarte 4, der per elektromagnetischer Energieübertragung 9 aktiviert wird, geschieht über die Kontaktanschlüsse 6 der Chipkarte 4. Das gegen Mißbrauch geschützte Laden von Kontaktkarten wird bei Gesundheitsdaten oder Telefoneinheiten bereits angewandt und kann zum Einlesen von Magnetstreifeninformationen verwendet werden. Mit dem Laden des Magnetstreifencodes über diese gesicherte Kontaktstrecke ist gewährleistet, daß Magnetstreifendaten nicht ungesichert in die Karte geladen werden können.

Besteht die Möglichkeit, kontaktfreie Chipkarten auch über Entfernung in ihrem Speicher zu verändern, ist es grundsätzlich nicht möglich zu entscheiden, ob Daten ohne Wissen des Karteninhabers in einen Speicher gekommen sind. Es kann derart ein Speicher vorsätzlich zum Zwecke des Mißbrauchs verändert worden sein, es kann aber auch per Zufall aufgrund von Störeffekten ein Speicher unbemerkt für den Karteninhaber über eine Entfernung verändert worden sein. Nach der DE 43 27 334 ist bekannt, wie eine Karte mit zwei Spulen selbsttätig entscheiden kann, ob sie sich im Nahbereich eines Senders befindet.

Deshalb werden in einer Chipkarte 4 zum Einlesen von Magnetstreifeninformationen zwei Spulen 12 verwendet. In diesem Falle kann eine gleiche Sicherheit gegen unbemerktes Verändern des Speichers erreicht werden, wie es bei Kontaktkarten gewährleistet ist. Sicherheitsalgorithmen können in gleicher Weise verwendet werden, wie es auch bei Kontaktkarten der Fall ist. Das kontaktfreie Laden über zwei Spulen 12 hat den Vorteil, daß die störanfälligen Kontaktanschlüsse 6 als sicherheitsrelevante Teile nich mehr erforderlich sind, da zwei Spulen gleiche Sicherheit bei geringerer Störanfälligkeit bieten.

Wird die Chipkarte 4 elektromagnetisch aktiviert, kann durch eine elektronische Schaltungsanordnung im Schaltungsteil 2 bei Nutzung nur einer Spule 12 sichergestellt werden, daß keine kontaktfreie Beeinflussung, symbolisiert durch die Bezugsziffer 7 in Figur 2, oder Änderung des Speichers 3 auf der Chipkarte 4 erfolgen kann. Der Schaltungsteil 2 kann so aufgebaut sein, daß bei elektromagnetischer Einspeisung von Energie 9 kein Einlesen von Daten in den Speicher 3 möglich ist. Beispielsweise kann vom Schaltungsteil 2 indiziert werden, ob die Versorgungsspannung aus der Quelle Spulen 12 oder aus der Quelle Kontaktanschlüsse 6 erfolgt. Damit ist sichergestellt, daß das Nachladen dieser Chipkarten nur in Schreib/Leseendgeräten über Kontaktanschlüsse 6 geschehen kann. In diesem Falle sind Chipkarten erforderlich, die sowohl kontaktbehaftet wie auch kontaktfrei arbeiten können. Beschrieben sind solche Chipkarten in der DE 39 35 364. Das hier beschriebene Verfahren dient der Sicherheit der Speicherung von Daten in Chipkarten in gleicher Weise, wie es auch bei geldwerten Informationen auf der Chipkarte der Fall ist. Die Kartennutzung wird beispielsweise per PIN-Code-Eingabe vom Inhaber der Chipkarte geschützt.

Die Aktivierung der Chipkarte über Kontaktanschlüsse 6 kann auch gleichzeitig die kontaktfreie Übertragung 8 aktivieren. Derart ist es möglich, die Datenausgabe 8 der Magnetstreifendaten auf Übereinstimmung mit der Dateneinspeisung 10 in ein- und demselben Gerät zu überprüfen und auf einwandfreie Funktion zu testen, ohne auf die kontaktfreie Einspeisung von Energie 9 angewiesen zu sein.

Das Auslesen der Magnetstreifeninformationen kann somit auch über die Kontaktanschlüsse einer Chipkarte erfolgen, so daß der aufwendige Transportmechanismus für Magnetstreifenkarten in Kontaktlesern entfallen kann.

Sind Karten in Nutzung, welche ausschließlich Magnetstreifen enthalten, können diese nur über geeignete Magentstreifenleser gelesen werden. Enthalten diese Geräte zusätzlich kontaktfreie Leseeinrichtungen, müssen die Nutzer von kontaktfraien Chipkarten ihre Chipkarte vorteilhaft nicht mehr in den Leseschlitz schieben und sind von der Entscheidung, wie die Chipkarte einzuschieben ist, befreit, da die kontaktlose Lesung lagenunabhängig erfolgt.

Im Markt befinden sich unterschiedliche Magnetstreifenkarten. So nutzen beispielsweise Zeiterfassungen per Karte andere Magnetstreifenspuren und Datenformate als Kreditkarten. Sind im Speicher der Chipkarte diese unterschiedlichen Informationen abgelegt, können diese über die kontaktfreie Strecke ausgegeben werden, so daß das Terminal entscheiden kann, ob die benötigten Informationen in den übertragenen Daten enthalten sind. Demgemäß ist es vorteilhaft möglich, die Informationen einer Chipkarte beispielsweise einmal für eine Bankanwendung und ein anderes Mal für eine Zeiterfassung zu nutzen.

Beim Nutzen der Chipkarte 4 in einem Schreib/Leseendgerät 1 können neue Daten in den Speicher 3 der Chipkarte 4 geschrieben werden, welche zum Verschlüsseln der Daten genutzt werden, die als Magnetstreifenkarteninformation dort vorliegen. Die kontaktfrei übertragenen Informationen sind derart mit jedem Nutzen der Chipkarte in einem Schreib/Leseendgerät 1, beispielsweise Bankterminal, neu verschlüsselt. Das Abhören einer kontaktfrei übertragenen Information kann also nur bis zum nächsten Nutzen der Chipkarte in einem Terminal von Bedeutung sein.

Ein Schreib/Leseendgerät 1 kann so eingerichtet sein, daß es die Informationen vom Magnetstreifen 11 der Chipkarte 4 abzulesen und anschließend über Kontaktanschlüsse 6 oder kontaktfrei in die Chipkarte 4 einzulesen imstande ist. Da Karten üblicherweise mit einem Magnetstreifen versehen werden, der seine Informationen in Geräten erhalten hat, welche keine Kontaktanschlüsse oder Spulen für Chipkarten 4 haben, kann über dieses Verfahren die Magnetstreifeninformation in den Speicher 3 gelesen werden. Bei Chipkarten, die keine Magnetstreifen enthalten, können die Informationen, die den Informationen von Magnetstreifen entsprechen, über Kontaktanschlüsse 6 oder Spulen 12 ausgelesen werden.

Des weiteren können Chipkarten Energiespeicher enthalten und damit geeignet sein, ihre Informationen über größere Entfernung kontaktfrei zu übertragen. Da bei diesen Chipkarten der kontaktfreie Energieempfang nicht nötig ist, sind die physikalischen Bedingungen für die optimale Anpassung von Spulen und Übertragungsstrecken nicht einzuhalten. Es können beispielsweise Frequenzen zum Senden verwandt werden, die im Bereich von Infrarotlicht liegen. Ebenso können Chipkarten Kondensatoren zur kontaktfreien Übertragung nutzen und in gleicher Weise geeignet sein, Magnetstreifeninformationen kontaktfrei zu Schreib/Leseendgeräten 1 zu übertragen.

### Gewerbliche Anwendbarkeit:

Die Erfindung ist für Chipkarten mit kontaktlosen Anschlüssen und wahlweise zusätzlichen Kontaktanschlüssen in der Zusammenarbeit mit Schreib/Leseendgeräten gewerblich anwendbar, an die über eine Datenleitung ein weiteres, entfernt aufgestelltes Gerät angeschlossen ist.

### Liste der Bezugszeichen:

- 1: Schreib/Leseendgerät (Schreib/Leseendgerät)
- 2: ein Schaltungsteil der elektronischen Schaltung der Chipkarte
- 3: Kartenspeicher
- 4: Chipkarte
- 5: Bauteil für die kontaktfreie Aussendung von Daten (Speicher)
- 6: Kontaktanschlüsse
- 7: von der Chipkarte ausgesendetes elektromagnetische Wechselfeld oder Symbol für eine kontaktfreie Beeinflussung der Chipkarte
- 8: Datenausgang oder ausgegebene Informationen
- 9: vom Schreib/Leseendgerätes ausgesendetes elektromagnetische Feld
- 10: Datenein- und ausgang in den Schaltungsteil 2 der Chipkarte
- 11: Magnetstreifen
- 12: Spulen
- 13: Datenleitung

## Patentansprüche

1. Verfahren zum Austausch von Energie- und Daten zwischen einem Schreib/Leseendgerät (1) und einer Chipkarte (4) mit kontaktlosen Anschlüssen und wahlweise zusätzlichen Kontaktanschlüssen (6), wobei Energie- und Daten entweder kontaktlos zwischen Schreib/Leseendgerät (1) und Chipkarte (4) mittels elektromagnetischer Wechselfelder oder kontaktbehaftet über die Kontaktanschlüsse (6) beim Einführen der Chipkarte (4) in das Schreib/Leseendgerät (1) übertragen werden und die Chipkarte (4) bei Erreichen eines Mindestwertes des Energieinhaltes des elektromagnetischen Wechselfeldes des Schreib/Leseendgerätes (1) sich mit wenigstens einem Schaltungsteil (2) ihrer elektronischen Schaltung selbsttätig aktiviert, **dadurch gekennzeichnet,**
**dass** mit der Aktivierung dieser Schaltungsteil (2) berührungslos Informationen zum Schreib/Leseendgerät (1) mittels elektromagnetischer Schwingungen aussendet und wahlweise empfängt, wobei in den ausgesandten Informationen die Daten mit einem Inhalt enthalten sind, wie sie den Daten/Informationsinhalten von Magnetstreifenkarten entsprechen, so dass die Chipkarte (4), manuell in die Nähe eines Schreib/Leseendgerätes (1) gehalten, dieses veranlaßt, die Daten der Chipkarte (4) in der gleichen Form zu erstellen, die auch eine Magnetstreifenkarte beim Ablesen des Magnetstreifens durch einen magnetischen Lesekopf in einem Magnetstreifenleser erzeugen würde.

2. Verfahren nach Anspruch 1, **dadurch gekennzeichnet,**
**dass** das kontaktlose Einlesen der elektromagnetisch abzugebenden Magnetstreifeninformationen (8) in den Schaltungsteil (2) der Chipkarte (4) über zwei Spulen (12) geschieht, womit die Chipkarte (4) elektronisch selbsttätig detektieren kann, ob sie sich im Nahbereich oder im Fernbereich eines Schreib/Leseendgerätes (1) befindet und in Abhängigkeit von dieser Detektierung der Empfang der einzugebenden Magnetstreifeninformation ein- oder ausgeschaltet wird, wobei das kontaktlose Einlesen der Magnetstreifeninformationen (8) über die zwei Spulen (12) nur im Nahbereich des Schreib/Leseendgerätes (1) durchgeführt werden kann.

3. Verfahren nach Anspruch 1 oder 2, **dadurch gekennzeichnet,**
**daß** der Schaltungsteil (2) der Chipkarte (4) in Abhängigkeit von der Herkunft ihrer Aktivierung so geschaltet ist, dass einerseits bei kontaktfreier elektromagnetischer Aktivierung der Schaltungsteil (2) die Daten entsprechend Magnetstreifenkartendaten aus einem Bauteil (3) zum kontaktfreien Datenempfang oder Datenabgabe oder Datenspeichern ausschließlich kontaktfrei überträgt, hingegen jedwede Form des kontaktfreien Einspeicherns von Daten in den Bauteil (3) durch elektronische Schaltungsanordnungen innerhalb der Chipkarte (4) zum Einlesen von Daten gesperrt wird, andererseits bei Aktivierung durch die Kontaktanschlüsse (6) der Schaltungsteil (2) zum Einlesen von Daten entsprechend Magnetstreifenkartendaten geöffnet wird.

4. Verfahren nach Anspruch 2, **dadurch gekennzeichnet,**
**daß** der Schaltungsteil (2) der Chipkarte (4) in Abhängigkeit von der Herkunft ihrer Aktivierung so geschaltet ist, dass bei Aktivierung der Chipkarte über die zwei Spulen (12), der Schaltungsteil (2) zum Einlesen von Daten entsprechend Magnetstreifenkartendaten geöffnet wird, wobei das kontaktlose Einlesen der Magnetstreifeninformationen (8) über die zwei Spulen (12) nur im Nahbereich des Schreib/Leseendgerätes (1) durchgeführt werden kann.

5. Verfahren nach Anspruch 2 oder 3, **dadurch gekennzeichnet,**
**daß** beim Aktivieren des Schaltungsteils (2) der Chipkarte (4) über die Kontaktanschlüsse (6) gleichzeitig über dieselben Energie zur elektromagnetischen Datenübertragung (8) eingespeist wird.

6. Verfahren nach Anspruch 2 oder 3 oder 4, **dadurch gekennzeichnet,**
**daß** beim Nachladen von Daten aus dem Schreib/Leseendgerät (1) in die Chipkarte (4) über die Kontaktanschlüsse (6) oder über das elektromagnetische Wechselfeld des Schreib/Leseendgerätes (1) Informationen zur Verschlüsselung der vom Schreib/Leseendgerät (1) auszugebenden Daten in die Chipkarte (4) geladen werden, so daß die kontaktfrei elektromagnetisch übermittelten Daten sich in ihrer Codierung in Abhängigkeit vom Nachladen ändern.

7. Verfahren nach Anspruch 1 oder 2, **dadurch gekennzeichnet,**
**daß** die kontaktlos übertragenen Daten der Chipkarte (4) an das Schreib/Leseendgerät (1) über eine Datenleitung (13) an ein weiteres, entfernt aufgestelltes Gerät übertragen werden, welches aufgrund Gleichheit der übertragenen Daten entweder aus dem Magnetstreifen (11) der Chipkarte (4) oder aus einem Bauteil (3) zum kontaktfreien Datenempfang oder Datenabgabe oder Datenspeichern nicht unterscheiden kann, ob die erhaltene Information von einem Magnetstreifen (11) oder aus dem Bauteil (3) der Chipkarte (4) herrührt.

8. Verfahren nach einem der Ansprüche 3 bis 6, **dadurch gekennzeichnet,**
**dass** im Speicher (3) der Chipkarte (4) unterschiedliche Informationen entsprechend mehreren unterschiedlichen Magnetstreifenspuren und Datenformaten abgelegt sind, so daß die Chipkarte (4) über ihre kontaktfreie Strecke diese unterschiedlichen Informationen ausgibt, so dass das Schreib/Leseendgeräte entscheiden kann, ob die benötigten Informationen in den übertragenen Daten enthalten sind und damit die Anforderungen unterschiedlicher Schreib/Leseendgeräte oder unterschiedlicher Programme in einem Schreib/Leseendgerät erfüllen kann.

9. Verfahren nach Anspruch 8, **dadurch gekennzeichnet,**
**daß** die Daten aus der berührungslosen oder kontaktbehafteten Datentübertragung (8) der Chipkarte (4) im Schreib/Leseendgerät (1) in denselben Ausgangskanal eingespeist werden, in den auch die Daten aus dem Magnetstreifen (11) eingespeist werden.

10. Chipkarte mit kontaktlosen Anschlüssen und wahlweise zusätzlichen Kontaktanschlüssen (6) zum Austausch von Energie- und Daten zwischen einem Schreib/Leseendgerät (1) und der Chipkarte (4), wobei Energie- und Daten entweder kontaktlos zwischen Schreib/Leseendgerät (1) und Chipkarte (4) mittels elektromagnetischer Wechselfelder oder kontaktbehaftet über die Kontaktanschlüsse (6) beim Einführen der Chipkarte (4) in das Schreib/Leseendgerät (1) übertragen werden, mit einem Bauteil (3), wie elektronischer Speicher (3), in welchem Daten entsprechend den Magnetstreifenkartendaten einer Magnetstreifenkarte enthalten sind, wobei die Chipkarte (4) bei Erreichen eines Mindestwertes des Energieinhaltes des elektromagnetischen Wechselfeldes des Schreib/Leseendgerätes (1) sich mit wenigstens einem Schaltungsteil (2) ihrer elektronischen Schaltung selbsttätig aktiviert und dadurch mittels des Schaltungsteil (2) die Daten aus dem Bauteil (3) entsprechend den Magnetstreifenkartendaten einer Magnetstreifenkarte über die kontaktlosen Anschlüsse der Chipkarte (4) ausgegeben werden.

11. Chipkarte nach Anspruch 10, **dadurch gekennzeichnet,**
**dass** im Bauteil (3) der Chipkarte (4) Daten entsprechend mehrerer unterschiedlicher Codes von Magnetstreifenkartendaten enthalten sind, so daß die Chipkarte (4) zur Erfüllung unterschiedlicher Anforderungen mit unterschiedlichen Schreib/Leseendgeräten oder mit unterschiedichen Programmen geeignet ist, die jeweils auf die unterschiedlichen Codierungen eingestellt sind und die Chipkarte über die kontaktfreie Verbindungsstrecke die unterschiedlichen Codierungen abzugeben imstande ist.

12. Chipkarte nach Anspruch 10 oder 11, **dadurch gekennzeichnet,**
**daß** die Chipkarte (4) eine solche mit Magnetstreifen (11) zur Aufnahme und zum Lesen von Magnetstreifenkartendaten in bekannter Weise oder eine solche ohne Magnetstreifen ist.

13. Chipkarte nach Anspruch 10 oder 11 oder 12, **dadurch gekennzeichnet,**
**daß** die Chipkarte (4) mit zusätzlichen elektrischen Energiespeichern, wie Kondensatoren oder Batterien oder Akkumulatoren, versehen ist, um die kontaktfrei auszugebenden Daten über größere Entfernungen zu übertragen, als es bei kontaktfreier Datenübertragung (8) mittels des elektromagnetischen Wechselfeldes (7) der Chipkarte (4) möglich ist.

14. Chipkarte nach Anspruch 10, **dadurch gekennzeichnet,**
**daß** die Chipkarte (4) zum kontaktlosen Einlesen der elektromagnetisch abzugebenden Magnetstreifeninformationen (8) in den Schaltungsteil (2) der Chipkarte (4) zwei Spulen (12) aufweist, mittels derselben die Chipkarte (4) elektronisch selbsttätig zu delektieren imstande ist, ob sie sich im Nahbereich oder im Fernbereich eines Schreib/Leseendgerätes (1) befindet und in Abhängigkeit von dieser Detektierung die Chipkarte (4) den Empfang der einzugebenden Magnetstreifeninformation ein- oder ausgeschaltet, wobei die Chipkarte (4) das kontaktlose Einlesen der Magnetstreifeninformationen (8) über die zwei Spulen (12) nur im Nahbereich des Schreib/Leseendgerätes (1) durchführt.

## Claims

1. A process for exchanging energy and data between a read/write terminal (1) and a chip card (4) with contactless connections and optionally with additional contact connections (6), whereby energy and data are either transferred without contact between the read/write terminal (1) and the chip card (4) by means of electromagnetic alternating fields or with contact via the contact connections (6) when the chip card (4) is inserted into the read/write terminal (1) and, when the chip card (4) reaches a minimum value of the energy level of the electromagnetic alternating field of the read/write terminal (1), said chip card autonomously activating itself with at least one circuit part (2) of its electronic circuit, **characterized in that**,
upon activation, this circuit part (2) sends out information to the read/write terminal (1) without contact by means of electromagnetic oscillations and optionally receives information, whereby the sent-out information contains the data whose content corresponds to the data/information contents of magnetic strip cards, so that when the chip card (4) is manually held in close proximity to a read/write terminal (1), it causes the terminal to draw up the data of the chip card (4) in the same form in which a magnetic strip card would also generate it if the magnetic strip were read by a magnetic reading head in a magnetic strip reading device.

2. The process according to Claim 1, **characterized in that**
the contactless reading in of the magnetic strip information (8) to be electromagnetically transferred takes place in the circuit part (2) of the chip card (4) via two coils (12), as a result of which the chip card (4) can autonomously detect electronically whether it is in the vicinity of or far away from a read/write terminal (1) and, as a function of this detection, the reception of the magnetic strip information to be entered is switched on or off, whereby the contactless reading of the magnetic strip information (8) can be carried out via two coils (12) only in the vicinity of the read/write terminal (1).

3. The process according to Claim 1 or 2, **characterized in that**
the circuit part (2) of the chip card (4), depending on the source of its activation, is arranged in such a way that, on the one hand, in the case of contact-free electromagnetic activation, the circuit part (2) exclusively transfers the data without contact, corresponding to magnetic strip card data from the component (3) for contactless data reception or data output or data storage, whereas any form of contact-free storage of data into the component (3) is blocked for reading in data by electronic circuit means inside the chip card (4), and on the other hand, upon activation through the contact connections (6), the circuit part (2) is opened for reading in data corresponding to magnetic strip card data.

4. The process according to Claim 2 or 3, **characterized in that**
the circuit part (2) of the chip card (4), depending on the origin of its activation, is switched in such a way that, when the chip card is activated via the two coils (12), the circuit part (2) is opened for reading in data corresponding to magnetic strip card data, whereby the contactless reading in of the magnetic strip information (8) can be carried out only in the vicinity of the read/write terminal (1).

5. The process according to Claim 2 or 3, **characterized in that**,
when the circuit part (2) of the chip card (4) is activated via the contact connections (6), energy can be concurrently fed in through said contact connections for purposes of effectuating electromagnetic data transmission (8).

6. The process according to Claim 2 or 3 or 4, **characterized in that**,
when data is reloaded from the read/write terminal (1) into the chip card (4) via the contact connections (6) or via the electromagnetic alternating field of the read/write terminal (1), information for encoding the data to be output by the read/write terminal (1) can be loaded into the chip card (4) so that the coding of the contact-free, electromagnetically transmitted data changes as a function of the reloading.

7. Process according to Claim 1 or 2, **characterized in that**
the data of the chip card (4) that is transferred without contact is transmitted to the read/write terminal (1) via a data line (13) to another, remotely located device which, due to the similarity of the data being transferred either from the magnetic strip (11) of the chip card (4) or from a component (3) for contact-free data reception or data output or data storage, cannot distinguish whether the information received comes from a magnetic strip (11) or from the component (3) of the chip card (4).

8. The process according to one of Claims 3 to 6, **characterized in that**,
in the memory (3) of the chip card (4), different information corresponding to several different magnetic strip tracks and data formats is stored, so that the chip card (4) outputs {?} this different information via its contact-free path so that the read/write terminal can decide whether the necessary information is contained in the transmitted data and can thus fulfill the requirements of different read/write terminals or different programs in a read/write terminal.

9. The process according to Claim 8, **characterized in that**
the data of the chip card (4) from the data transmission (8) with or without contact in the read/write terminal (1) is fed into the same output channel into which the data from the magnetic strip (11) is also fed.

10. A chip card with contactless connections and optionally with additional contact connections (6) for exchanging energy and data between a read/write terminal (1) and a chip card (4), whereby energy and data are either transferred without contact between the read/write terminal (1) and the chip card (4) by means of electromagnetic alternating fields or with contact via the contact connections (6) when the chip card (4) is inserted into the read/write terminal (1), with a component (3), such as an electronic memory (3), in which data corresponding to the magnetic strip card data of a magnetic strip card is contained whereby, when the chip card (4) reaches a minimum value of the energy level of the electromagnetic alternating field of the read/write terminal (1), said chip card autonomously activates itself with at least one circuit part (2) of its electronic circuit, and consequently, by means of the circuit part (2), data is output from the component (3) that corresponds to magnetic strip card data of a magnetic strip card via the contactless connections of the chip card (4).

11. The chip card according to Claim 10, **characterized in that**
the component (3) of the chip card (4) contains data corresponding to several different codes of magnetic strip card data, so that the chip card (4) is suited to fulfill different requirements of different read/write terminals or different programs which are each associated with different encoding, and the chip cards can transfer the different codings via their contact-free connection path.

12. The chip card according to Claim 10 or 11, **characterized in that**
the chip card (4) is a card with a magnetic strip (11) for receiving and reading magnetic strip card data in a known manner or else it is a card without such a magnetic strip.

13. The chip card according to Claim 10 or 11 or 12, **characterized in that**
the chip card (4) is provided with additional electrical energy storage elements such as, for example, condensers, batteries or accumulators in order to transfer the data which is to be output without contact over larger distances than would be possible with contact-free data transmission (8) by means of the electromagnetic alternating field (7) of the chip card (4).

14. The chip card according to Claim 10, **characterized in that**,
for purposes of the contactless reading in of the magnetic strip information (8) to be electromagnetically transferred into the circuit part (2) of the chip card (4), it has two coils (12) by means of which the chip card (4) can autonomously detect electronically whether it is in the vicinity of or far away from a read/write terminal (1) and, as a function of this detection, the chip card (4) switches the reception of the magnetic strip information to be entered on or off, whereby the chip card (4) carries out the contactless reading of the magnetic strip information (8) via the two coils (12) only in the vicinity of the read/write terminal (1).

## Revendications

1. Procédé pour l'échange d'énergie et de données entre un terminal de d'écriture-lecture (1) et une carte à puce (4) comprenant des bornes sans contact et au choix des bornes à contact supplémentaires (6), l'énergie et les données étant transmises soit sans contact entre le terminal d'écriture-lecture (1) et la carte à puce (4) au moyen de champs alternatifs électromagnétiques, soit à contact via les bornes à contact (6) lors de l'insertion de la carte à puce (4) dans le terminal d'écriture-lecture (1), et la carte à puce s'activant automatiquement au moyen d'au moins une partie (2) de son circuit électronique, lorsqu'une valeur minimum du contenu énergétique du champ alternatif électromagnétique du terminal d'écriture-lecture (1) est atteinte, **caractérisé en ce que**,
grâce à l'activation, cette partie de circuit (2) envoie au terminal d'écriture-lecture (1) ou reçoit au choix des informations sans contact au moyen d'oscillations électromagnétiques, les données étant contenues dans les informations émises avec un contenu correspondant aux contenus des données/informations de cartes à bande magnétique, de sorte que la carte à puce (4), lorsqu'on la tient à proximité d'un terminal d'écriture-lecture, amène ce dernier à générer les donnes de la carte à puce (4) dans une forme identique à celle qu'engendrerait une carte à bande magnétique lors de la lecture de la bande magnétique au moyen d'une tête de lecture magnétique dans un lecteur de bandes magnétiques.

2. Procédé selon la revendication 1, **caractérisé en ce que**
la lecture sans contact des informations de la bande magnétique (8) à transmettre par voie électromagnétique dans la partie de circuit (2) de la carte à puce (4) s'effectue par l'intermédiaire de deux bobines (12), la carte à puce (4) pouvant ainsi détecter elle-même électroniquement, si elle se trouve à proximité ou à distance d'un terminal d'écriture-lecture (1), enclenchant ou désenclenchant en fonction de cette détection la réception de l'information de la bande magnétique à entrer, la lecture sans contact des informations de la bande magnétique (8) par l'intermédiaire des deux bobines (12) n'étant possible qu'à proximité du terminal d'écriture-lecture (1).

3. Procédé selon la revendication 1 ou 2, **caractérisé en ce que**,
en fonction de la provenance de l'activation, la partie de circuit (2) de la carte à puce (4) est connectée de sorte que, d'une part, en cas de l'activation électromagnétique sans contact, la partie de circuit (2) transmet exclusivement sans contact les données correspondant à des données d'une carte à bande magnétique à partir d'un composant (3) pour la réception ou la sortie ou le stockage de données sans contact, toute forme de stockage sans contact de données dans le composant (3) étant par contre bloquée par des circuits électroniques à l'intérieur de la carte à puce (4) pour la lecture de données, et que, d'autre part, en cas de l'activation au moyen des bornes à contact (6), la partie de circuit (2) est ouverte pour la lecture de données correspondant à des données d'une carte à bande magnétique.

4. Procédé selon la revendication 2, **caractérisé en ce que**,
en fonction de la provenance de l'activation, la partie de circuit (2) de la carte à puce (4) est connectée de sorte que, lorsque la carte à puce est activée via les deux bobines (12), la partie de circuit (2) est ouverte pour la lecture de données correspondant à des données d'une carte à bande magnétique, la lecture sans contact des informations de la bande magnétique (8) via les deux bobines (12) ne pouvant s'effectuer qu'à proximité du terminal d'écriture-lecture (1).

5. Procédé selon la revendication 2 ou 3, **caractérisé en ce que**
lorsque la partie de circuit (2) de la carte à puce (4) est activée via les bornes à contact (6), l'on alimente en même temps de l'énergie via ces dernières pour la transmission électromagnétique de données (8).

6. Procédé selon l'une quelconque des revendication 2 ou 3 ou 4,
**caractérisé en ce que**, lorsque des données du terminal d'écriture-lecture (1) sont rechargées dans la carte à puce (4) via les bornes à contact (6) ou via le champ alternatif électromagnétique du terminal d'écriture-lecture (1), des informations servant à la codification des données à sortir par le terminal d'écriture-lecture (1) sont chargées dans la carte à puce (4), de sorte que le codage des données transmises sans contact par voie électromagnétique varie en fonction du rechargement.

7. Procédé selon la revendication 1 ou 2, **caractérisé en ce que**
les données de la carte à puce (4) transmises sans contact au terminal d'écriture-lecture (1) sont transmises via une ligne de données (13) à un autre appareil installé à distance, lequel, en raison de l'égalité des données transmises soit à partir de la bande magnétique (11) de la carte à puce (4), soit à partir d'un composant (3) pour la réception ou la sortie ou le stockage sans contact de données, n'est pas en mesure de distinguer si l'information reçue provient d'une bande magnétique (11) ou du composant (3) de la carte à puce (4).

8. Procédé selon l'une quelconque des revendication 3 à 6, **caractérisé en ce que**
différentes informations correspondant à plusieurs pistes de bande magnétique et formats de données différents sont déposées dans la mémoire (3) de la carte à puce (4), de sorte que la carte à puce (4) sort ces informations différentes via son parcours sans contact, de sorte que le terminal d'écriture-lecture puisse décider, si les informations requises sont contenues dans les données transmises et, ainsi, puisse remplir les exigences de différents terminaux d'écriture-lecture ou de différents programmes d'un même terminal d'écriture-lecture.

9. Procédé selon la revendication 8, **caractérisé en ce que**,
dans le terminal d'écriture-lecture, les données de la transmission de données (8) sans ou avec contact de la carte à puce (4) sont alimentées dans le même canal de sortie dans lequel sont alimentées également les données de la bande magnétique (11).

10. Carte à puce comportant des bornes sans contact et au choix des bornes à contact supplémentaires (6) pour l'échange d'énergie et de données entre un terminal d'écriture-lecture (1) et la carte à puce (4), l'énergie et les données étant transmises soit sans contact entre le terminal d'écriture-lecture (1) et la carte à puce (4) au moyen de champs alternatifs électromagnétiques, soit à contact via les bornes à contact (6) lors de l'insertion de la carte à puce (4) dans le terminal d'écriture-lecture (1), et comportant un composant (3), tel qu'une mémoire électronique (3), dans laquelle sont contenues des données qui correspondent aux données d'une carte à bande magnétique, la carte à puce (4) s'activant automatiquement au moyen d'au moins une partie (2) de son circuit électronique, lorsqu'une valeur minimum du contenu énergétique du champ alternatif électromagnétique du terminal d'écriture-lecture (1) est atteinte et, de ce fait, les données contenues dans le composant (3) et correspondant aux données d'une carte à bande magnétique étant sorties au moyen la partie de circuit (2) via les bornes sans contact de la carte à puce (4).

11. Carte à puce selon la revendication 10, **caractérisée en ce que**
des données correspondant à plusieurs codes différents de données de cartes à bande magnétique sont contenues dans le composant (3) de la carte à puce (4), de sorte que la carte à puce (4) puisse remplir les exigences de différents terminaux d'écriture-lecture ou de différents programmes adaptés aux différents codages et que la carte à puce soit en mesure de sortir les différents codages via le parcours de connexion sans contact.

12. Carte à puce selon la revendication 10 ou 11, **caractérisée en ce que**
la carte à puce (4) est une carte à bande magnétique (11) qui reçoit et lit les données de cartes à bande magnétique suivant la méthode connue ou une carte sans bande magnétique.

13. Carte à puce selon l'une quelconque des revendications 10, 11 ou 12, **caractérisée en ce que**
la carte à puce (4) est équipée d'accumulateurs d'énergie électrique supplémentaires, tels des condensateurs ou des batteries ou des accumulateurs, destinés à transmettre les données à sortir sans contact sur des distances supérieures à celles qui sont possibles en utilisant la transmission de données sans contact (8) au moyen du champ alternatif électromagnétique (7) de la carte à puce (4).

14. Carte à puce selon la revendication 10, **caractérisée en ce que**
la carte à puce, pour assurer la lecture sans contact des information de la bande magnétique (8) à transmettre par voie électromagnétique dans la partie de circuit (2) de la carte à puce (4), présente deux bobines (12), au moyen desquelles la carte à puce (4) est en mesure de détecter elle-même électroniquement, si elle se trouve à proximité ou à distance d'un terminal d'écriture-lecture (1)et enclenche ou désenclenche en fonction de cette détection la réception de l'information de la bande magnétique à entrer, la carte à puce (4) n'effectuant qu'à proximité du terminal d'écriture-lecture (1) la lecture sans contact des information de la bande magnétique (8) via les deux bobines (12).
